# EUROPEAN PATENT SPECIFICATION

(11) **EP 2 987 821 B1**
(45) Date of publication and mention of the grant of the patent: **29.05.2019**
(21) Application number: 15180377.2
(22) Date of filing: 10.08.2015
(51) Int. Cl.: C08L 95/00, C08L 17/00, C08J 11/04, D06N 5/00, D06N 7/00, E04D 5/10, E04D 11/02

(54) **BITUMEN COMPOSITION COMPRISING DEGRADED WASTE RUBBER MATERIAL**
BITUMENZUSAMMENSETZUNG MIT TEILWEISE DEGRADIERTEN GUMMIABFÄLLEN
COMPOSITION DE BITUME COMPRENANT UN MATÉRIAU DE DÉCHETS DE CAOUTCHOUC PARTIELLEMENT DÉCOMPOSÉ

(30) Priority: 20.08.2014 EP 14181683
(43) Date of publication of application: 24.02.2016
(73) Proprietor: VEDAG GmbH, 96050 Bamberg (DE)
(72) Inventor: Merten, Thomas, 96050 Bamberg (DE); Hörnig, Andreas, 96050 Bamberg (DE); Gröger, Gerd, 96050 Bamberg (DE)
(74) Representative: Stoffregen, Hans-Herbert

(56) References cited:
- EP-A1- 0 887 372
- WO-A1-2007/061173
- WO-A1-2011/091966
- WO-A2-2006/107179
- Mark S. Buncher: "Evaluating the Effects of the Wet and Dry Process for Inclusding Crumb Rubber Modifier in Hot Mix Asphalt", Dissertation, 30 August 1995 (1995-08-30), pages 1-186, XP055034600, Auburn, Alabama, USA Retrieved from the Internet: URL:http://asphaltrubber.org/ARTIC/RPA_A10 59.pdf [retrieved on 2012-08-03]
- Hak-Seo Kim ET AL: "EFFECTS OF ASPHALT RATIOS ON PROPERTIES OF CRUMB RUBBER MODIFIED ASPHALTS", 6th ICPT, Sapporo, Japan, July 2008, 1 July 2008 (2008-07-01), pages 1-7, XP055056635, Retrieved from the Internet: URL:http://www.clemson.edu/ces/arts/Effect s of Asphalt Ratios on Properties of Crumb Rubber Modified Asphalts.pdf [retrieved on 2013-03-14]
- Anonymous: "Product Data Sheet RUBBER POWDER ECORR RNM45 Chemical Properties", , 9 June 1997 (1997-06-09), page 1, XP055151280, Retrieved from the Internet: URL:www.quimiflex.pt/ingles/doc/RNM45.doc [retrieved on 2014-11-06]
- S Salwari ET AL: "Devulkanization of Whole Passenger Car Tire Material", Kautschuck Gummi Kunststoffe (KGK), 1 July 2013 (2013-07-01), pages 20-25, XP055151310, Retrieved from the Internet: URL:http://doc.utwente.nl/88392/1/KGK_7-8_ 2013_20-25.pdf [retrieved on 2014-11-06]
- ADHIKARI B ET AL: "Reclamation and Recycling of Waste Rubber", PROGRESS IN POLYMER SCIENCE, PERGAMON PRESS, OXFORD, GB, vol. 25, no. 7, 1 September 2002 (2002-09-01), pages 909-948, XP003009163, ISSN: 0079-6700, DOI: 10.1016/S0079-6700(00)00020-4
- CH. HIRSCHL ET AL: "Determining the degree of crosslinking of ethylene vinyl acetate photovoltaic module encapsulants-A comparative study", SOLAR ENERGY MATERIALS AND SOLAR CELLS, vol. 116, 1 September 2013 (2013-09-01), pages 203-218, XP055210546, ISSN: 0927-0248, DOI: 10.1016/j.solmat.2013.04.022
- Ralph Gamba: "SWELL RATIO TESTER REPORT; FY 2003; IHTR 2654", , 24 September 2004 (2004-09-24), pages 1-36, XP055210557, Indian Head, MD 20640-5035, USA Retrieved from the Internet: URL:www.dtic.mil/get-tr-doc/pdf?AD=ADA4272 77 [retrieved on 2015-09-01]
- Björn Böving ET AL: "Technische Regeln für die Planung und Ausführung von Abdichtungen mit Polymerbitumen- und Bitumenbahnen; abc der Bitumenbahnen; 6. Auflage 2017", , 1 January 2017 (2017-01-01), pages 1-328, XP055526699, Mainzer Landstraße 55, 60329 Frankfurt/Main ISBN: 978-3-9814132-1-2 Retrieved from the Internet: URL:https://www.derdichtebau.de/fm/7/Techn ische%20Regeln%20-%20abc%20der%20Bitumenba hnen.pdf [retrieved on 2018-11-26]

## Description

The present invention relates to bitumen compositions comprising a degraded waste rubber material, and the use of such bitumen compositions.

Bitumen compositions are well-established products used, for example, in roofing applications, basement applications, road construction and bridge construction. In order to improve the mechanical and rheological properties of bitumen, polymer-modified bitumen compositions comprising an elastomer or a plastomer have been developed. In this context, styrene-butadiene-styrene (SBS) block copolymers and styrene-isoprene-styrene (SIS) block copolymers have been preferably utilized as elastomers. Suitable plastomers include amorphous poly-alpha olefins, e.g. atactic polypropylene (aPP), polypropylene-polyethylene copolymers, and polypropylene-polyethylene-polybutylene terpolymers.

Styrene block copolymers provide a number of technical benefits, including low temperature flexibility, good elastic recovery, high durability and excellent ageing resistance. However, the use of high amounts of styrene block copolymers in bitumen compositions renders the corresponding products relatively expensive. Hence, there is a need to reduce the amount of styrene block copolymers in polymer-modified bitumen compositions while maintaining or even improving the favourable product characteristics achieved by the addition of such polymers.

In order to solve this problem, partial substitution of styrene block copolymers by a waste rubber material such as, for example, tire rubber powder has been proposed. Bitumen compositions comprising a waste rubber material derived from automobile tires are disclosed, for example, in WO 94/14896 A1, EP 1 873 212 A1, WO 2006/107179 A2, WO 2007/061173 A1, WO 2008/120053 A2, WO 2011/074003 A2 and US 2012/0309872 A1. However, the amount of waste rubber material that can be used in polymer-modified bitumen compositions is limited by the complex rheological and mechanical profiles polymer-modified bitumen compositions have to fulfil during their life-span.

A fundamental problem associated with the use of waste rubber material is the high viscosity of the polymer-modified bitumen composition to be produced. That is, by increasing the amount of waste rubber material in a polymer-modified bitumen composition, the viscosity of the polymer-modified bitumen composition is significantly increased. Consequently, since it is not possible to process polymer-modified bitumen compositions containing a high amount of waste rubber material, the use of waste rubber material in polymer-modified bitumen compositions is limited.

Nevertheless, waste rubber material remains to be an industrial product that is available in large amounts. Accordingly, it is still considered attractive from an economic and environmental perspective to reuse waste rubber material, either directly or in recycled form. As regards recycled waste rubber material, mechanical, thermomechanical and thermochemical recycling processes are to be mentioned, examples of which comprise those disclosed in EP 0 887 371 A1, Adhikari et al. (Prog. Polym. Sci. 25, 909-948) and Saiwari et al. (KGK - Kautschuk, Gummi, Kunststoffe 66(7-8), 20-25).

In particular, it is considered attractive to use increasing amounts of waste rubber material in the production of bituminous products, to thereby reduce the amount of relatively expensive, production energy demanding and crude oil resource depleting polymers in polymer-modified bitumen compositions, without negatively affecting the compositions' sophisticated performance characteristics. Simultaneously, it should be ensured that the bituminous product still has acceptable viscosity, in order to allow easy processing thereof even at low temperatures.

WO 2011/138412 A1 discloses a rubber-modified bitumen composition comprising a devulcanized rubber material, wherein the devulcanized rubber material is obtained by devulcanizing a vulcanized rubber material such as, for example, waste rubber in the presence of at least one dialkyl polysulfide. For achieving the desired effect, the dialkyl polysulfides are obligatorily employed in an amount of 1 to 30% by weight, and in particular in an amount of 5 to 20% by weight, based on the weight of the rubber material to be devulcanized.

WO 2014/044856 A1 discloses rubber-modified bitumen composition which is obtained by (i) mixing a vulcanized rubber material such as, for example, crump rubber from tires with bitumen, wherein the amount of bitumen is less than the amount of the vulcanized rubber material but is at least 5% weight of the total amount of bitumen and vulcanized rubber material, (ii) heating said mixture at a temperature above 200°C, and (iii) preferably mixing the mixture, wherein at least steps (ii) and (iii) are carried out in a pressurized reactor such as, for example, an extruder.

However, the use of chemical devulcanization agents such as those proposed by WO 2011/138412 A1 is unfavourable for different reasons. In particular, polymer-modified bitumen compositions produced in the presence of a chemical devulcanization agent typically contain both unreacted devulcanization agent and chemical by-products, which is neither economical nor desirable from an environmental point of view. In contrast thereto, the process disclosed in WO 2014/044856 A1 requires relatively high temperatures of up to 370°C, in order to allow extrusion of the mixture to be processed.

In view of the above, the object underlying the invention was to provide a bitumen composition in which the amount of elastomer or plastomer is reduced as compared to conventional polymer-modified bitumen compositions, without negatively affecting the rheological and mechanical properties of conventional polymer-modified bitumen compositions. Moreover, the bitumen composition should have low viscosity even at low temperatures or/and at relatively high content of waste rubber material, should be obtainable at low cost, and should be essentially free of chemical devulcanization agents. This object is achieved by a bitumen composition as defined in claim 1.

The bitumen composition of the invention comprises a bitumen base as a first mandatory component. The bitumen base is not particularly limited and can be chosen by a person skilled in the art based on the requirements of the final product. Typical bitumen bases suitable for use in the bitumen composition of the invention include distillation bitumen of different penetration grades, high vacuum bitumen and oxidation bitumen, all of which are commercially available in a plurality of varieties. In this context, reference is made, for example, to the handbook "E. Braun, Bitumen: Anwendungsbezogene Baustoffkunde für Dach- und Bauwerksabdichtungen, Rudolf Müller, Köln, 1987", as well as to standards DIN EN 12591, DIN EN 13304 and DIN EN 13305.

As a person skilled in the art will understand, the amount of bitumen base comprised by a bitumen composition depends on several factors, including the type of application and the specific bitumen variety employed. In the bitumen composition of the invention, however, the bitumen base is contained in an amount of 30 to 85% by weight, based on the total weight of the bitumen composition. Preferably, the amount of bitumen base in the bitumen composition of the invention is 40 to 85% by weight, more preferably 50 to 85% by weight, most preferably 60 to 85% by weight.

The bitumen composition of the invention further comprises 0.5 to 30% by weight, more preferably 1 to 25% by weight, most preferably 3 to 20% by weight of at least one elastomer or plastomer, based on the total weight of the bitumen composition, wherein said elastomer or plastomer is preferably not a waste rubber material or a material derived therefrom. Elastomers and plastomers suitable for use in bitumen compositions are described, for example, in the handbook "E. Braun, Bitumen: Anwendungsbezogene Baustoffkunde für Dach- und Bauwerksabdichtungen, Rudolf Müller, Köln, 1987", and are commercially available from a plurality of polymer manufacturers known to those skilled in the art.

If the bitumen composition comprises an elastomer, the elastomer is preferably a linear or radial styrene block copolymer. More preferably, the elastomer is selected from the group consisting of a styrene-butadiene-styrene (SBS) block copolymer, a styrene-isoprene-styrene (SIS) block copolymer, a styrene-ethylene/propylene-styrene (SEPS) block copolymer and a styrene-ethylene/butylene-styrene (SEBS) block copolymer. Most preferably, the elastomer is a linear or radial SBS block copolymer. In one embodiment, the bitumen composition comprises a combination of at least two elastomers, e.g. a combination of a linear SBS block copolymer and a radial SBS block copolymer or a combination of two radial SBS block copolymers.

If the bitumen composition comprises a plastomer, the plastomer is preferably selected from the group consisting of an amorphous poly-alpha-olefin, an ethylene-butyl acrylate copolymer and an ethylene-vinyl acetate copolymer, with poly-alpha-olefins being particularly preferred. Most preferably, the plastomer is an amorphous poly-alpha-olefin selected from the group consisting of atactic polypropylene, a polypropylene-polyethylene copolymer and a polypropylene-polyethylene-polybutylene terpolymer. According to the invention, however, the use of elastomers is preferred over the use of plastomers.

The bitumen composition of the invention further comprises a degraded (i.e. partially or fully degraded) waste rubber material as a second mandatory component. As used within the present application, the expression "degraded waste rubber material" designates a waste rubber material which has been subjected to conditions resulting in at least partial devulcanization or/and at least partial depolymerization of the waste rubber material. Waste rubber materials suitable for use in the present invention are commercially available from a plurality of suppliers and preferably include waste tire rubber materials, i.e. waste rubber materials derived from automobile or truck tires.

The amount of degraded waste rubber material contained in the bitumen composition of the invention is 1 to 40% by weight, preferably 1.5 to 30% by weight, more preferably 2 to 25% by weight, most preferably 2.5 to 20% by weight, based on the total weight of the bitumen composition. If the amount of degraded waste rubber material is lower than 1% by weight, the economical and environmental advantage resulting from the (partial) substitution of relatively expensive elastomers or plastomers by the cheaper waste rubber material is low. On the other hand, if the amount of degraded waste rubber material is higher than 40% by weight, the viscosity of the bitumen composition becomes too high for further processing.

Since the addition of up to 40% by weight of untreated waste rubber material to bitumen would produce a bitumen composition having unacceptable viscosity, the bitumen composition of the invention includes a degraded waste rubber material having a degree of crosslinking of 0 to 90%, preferably of 15 to 60%, more preferably of 20 to 50%, most preferably of 25 to 45%. By using such degraded waste rubber material, it is possible to significantly reduce the amount of elastomers or plastomers contained in conventional polymer-modified bitumen compositions without deteriorating their rheological and mechanical properties. As a result thereof, it is possible to save natural resources and to simultaneously produce polymer-modified bitumen compositions at lower cost.

Since the degree of crosslinking of the untreated waste rubber material to be degraded is typically unknown, the aforementioned degree of crosslinking of the degraded waste rubber material is not an absolute value but a relative value determined on the basis of the untreated waste rubber material, with the degree of crosslinking of the unreated waste rubber material being set to 100%. As used herein, a degraded waste rubber material having a degree of crosslinking of, for example, 35% thus means a waste rubber material in which the degree of crosslinking of the untreated waste rubber material subjected to degradation is reduced by 65%.

In order to be able to calculate the degree of crosslinking of the degraded waste rubber material from the degree of crosslinking of the untreated waste rubber material, the degree of swelling of both the untreated waste rubber material and the degraded waste rubber material is determined in a first step. Methods for determining the degree of swelling of polymeric materials such as waste rubber materials are widely known in the art, and especially include solvent swelling methods as described in Hirschl et al. (Sol. Energ. Mat. Sol. Cells 116, 203-218) and ASTM D2765.

The degraded waste rubber material is produced by a process effecting thermomechanical devulcanization or/and depolymerization of the waste rubber material to be degraded. That is, the degraded waste rubber material described herein is preferably produced in the essential absence or in the absence of a chemical agent capable of promoting devulcanization or/and depolymerization of the waste rubber material, the wording "in the essential absence or in the absence of a chemical agent capable of promoting devulcanization or/and depolymerization" meaning the presence of an amount of less than 1% by weight, preferably of less than 0.01% by weight, most preferably of 0% by weight, of the chemical agent, based on the weight of the waste rubber material to be degraded.

Specific examples of chemical agents capable of promoting devulcanization or/and depolymerization of waste rubber material include, but are not limited to, water, dialkyl polysulfides as those disclosed in WO 2011/138412 A1, diphenyl disulfide as described in Saiwari et al. (KGK - Kautschuk, Gummi, Kunststoffe 66(7-8), 20-25), and swelling agents as those mentioned in both Saiwari et al. (KGK - Kautschuk, Gummi, Kunststoffe 66(7-8), 20-25) and Adhikari et al. (Prog. Polym. Sci. 25, 909-948).

In order to ensure thermomechanical devulcanization or/and depolymerisation of the waste rubber material to be degraded, the aforementioned process requires passing the waste rubber material through an extruder. An extruder suitable for use in the aforementioned process comprises means for introducing the waste rubber material into the extruder (e.g. an injection inlet), means for controlling the temperature of the waste rubber material within the extruder (e.g. one or more heating means for softening the waste rubber material), means for ensuring a high shear strain within the extruder (e.g. one or more screws configured for high shear), means for removing the degraded waste rubber material from the extruder (e.g. an extrusion outlet), and optionally means for removing gaseous by-products obtained in the process from the extruder (e.g. one or more gas outlets).

Extruders realizing these features are known in the art or can be provided by those skilled in the field of extruder technology without any difficulty by adapting a known extruder based on a low number of routine experiments. That is, the extruder employed in the aforementioned process is basically not limited to a specific type of extruder, and includes twin screw extruders, planet-roll extruders, etc. Preferably, however, the waste rubber material to be degraded is introduced into a twin screw extruder, more preferably into a counter-rotating twin screw extruder, or into a planet-roll extruder, to thereby effect devulcanization or/and depolymerization of the waste rubber material in the essential absence or in the absence of chemical agents having the same technical effect.

In the process described above, the waste rubber material to be degraded can be in any shape or size theoretically allowing extrusion thereof. Examples comprise powders, crumbs, granules and pellets, but are not limited thereto. Preferably, however, the untreated waste rubber material is provided in the form of a powder, the particles of which typically have an average diameter of 0.01 to 1.0 mm, preferably of 0.01 to 0.6 mm, most preferably of 0.01 to 0.4 mm. Following selection of the waste rubber material to be degraded, it is introduced into the extruder.

Then, the waste rubber material is passed through the extruder, which step is carried out in the essential absence or in the absence of bitumen, the wording "in the essential absence or in the absence of bitumen" meaning the presence of an amount of less than 5% by weight, preferably of less than 1% by weight, most preferably of 0% by weight of bitumen, based on the total weight of bitumen and waste rubber material. In addition, the waste rubber material is passed through the extruder in the absence of non-waste rubber material-derived carbon black (i.e. in the absence of carbon black not already contained in the waste rubber material to be degraded), and is preferably passed through the extruder in the absence of any chemical agent capable of promoting revulcanization of the degraded waste rubber material obtained from the extrusion process.

In the extruder, the rubber waste material is subjected to conditions which, in combination with the high shear strain provided by the screw(s), effect devulcanization or/and depolymerization thereof. Using the means for controlling the temperature of the waste rubber material, the temperature of the waste rubber material within the extruder is preferably set to a range of from 150 to 260°C, more preferably to a range of from 180 to 240°C. The pressure within the extruder is usually of from 1 to 50 bar, while the rotational speed of the screw(s) is preferably adjusted to a range of from 1 rpm to 700 rpm, more preferably to a range of from 50 rpm to 550 rpm, most preferably to a range of from 50 rpm to 400 rpm. The degraded waste rubber material obtained by the extrusion process is typically granulated and then directly used for preparing the bitumen composition of the invention.

The bitumen composition of the invention further comprises 0 to 30% by weight, preferably 1 to 25% by weight, more preferably 3 to 20% by weight, most preferably 5 to 15% by weight of at least one oil, based on the total weight of the bitumen composition. If present, the oil largely functions as a plasticizer or softening agent and positively influences the structural integrity of the bitumen composition. Oils suitable for use in the bitumen compositions of the invention are not particularly limited and include both natural and synthetic oils, e.g. fatty oils and mineral oils. Preferably, the oil is a mineral oil derived from industrial distillation of crude oil, e.g. a light distillate (light fuel oil), a middle distillate or a heavy distillate (heavy fuel oil).

In another aspect, the present invention relates to a filler-modified bitumen composition comprising (a) 25 to <100% by weight, preferably 30 to 90% by weight, more preferably 35 to 80% by weight, most preferably 40 to 70% by weight of the bitumen composition of the invention, and (b) >0 to 75% by weight, preferably 10 to 70% by weight, more preferably 20 to 65% by weight, most preferably 30 to 60% by weight of at least one filler, based in each case on the total weight of the filler-modified bitumen composition. Fillers suitable for use in the filler-modified bitumen composition of the invention are known to those skilled in the art and comprise, for example, flyash, slate, dolomite and limestone. According to the invention, dolomite or limestone powder is preferred. Since the filler-modified bitumen composition of the invention provides the possibility of admixing up to 75% by weight of cheap filler, it is possible to significantly reduce the production costs of conventional bitumen compositions.

The bitumen composition and the filler-modified bitumen composition of the invention can be used for a plurality of purposes, including the production of bituminous sheets, the use as a joint compound, and the use as a hot sealing compound. Details thereon, as well as further applications are described in the handbook "E. Braun, Bitumen: Anwendungsbezogene Baustoffkunde für Dach- und Bauwerksabdichtungen, Rudolf Müller, Köln, 1987", which handbook is herewith incorporated by reference. Preferably, both the bitumen composition and the filler-modified bitumen composition of the invention is employed in roofing applications, basement applications, road construction applications and bridge construction, with roofing applications being especially preferred.

Further disclosed is a process for preparing a degraded waste rubber material, comprising the steps of:
(a) providing a waste rubber material; and
(b) passing the waste rubber material, in the absence of non-waste rubber material-derived carbon black, in the essential absence or in the absence of bitumen, and in the essential absence or in the absence of a chemical agent capable of promoting devulcanization or/and depolymerisation of the waste rubber material, through an extruder under conditions effecting thermomechanical devulcanization or/and depolymerisation of the waste rubber material.

Additionally disclosed is a degraded waste rubber material which is obtainable by the aforementioned process.

As regards any preferred embodiments of both the process and the degraded waste rubber material disclosed herein, it is explicitly referred to the preferred embodiments described in connection with the bitumen composition of the invention. As a matter of principle, the weight percentages of all components contained in either the bitumen composition or the filler-modified bitumen composition of the invention in each case add to a total of 100.

It is intended to further illustrate the invention by the following examples.

### Examples

In order to characterize the products described in the present application by concrete physical parameters, the degree of crosslinking, the viscosity, the softening point, the needle penetration, and the flexibility at low temperature has been determined using the following methods.

The degree of crosslinking of the degraded waste rubber material described herein was determined based on its swelling behavior in xylene. For this purpose, 3 g of the degraded waste rubber material was added to 100 ml of xylene, and the sample was allowed to stand for 3 days at room temperature. Thereafter, the swollen sample was removed from xylene, weighed, dried for 24 hours at 80°C, and weighed a final time, to thereby determine the amount of xylene taken up by the degraded waste rubber material. Similarly, 3 g of untreated waste rubber material was added to 100 ml of xylene, and the sample was allowed to stand for 3 days at room temperature. Thereafter, the swollen sample was removed from xylene, weighed, dried for 24 hours at 80°C, and weighed a final time, to thereby determine the amount of xylene taken up by the untreated waste rubber material underlying the degraded waste rubber material.

From this data, the degree of swelling for both the degraded waste rubber material (DS_{dr}) and the untreated waste rubber material (DSᵤᵣ) was calculated. Based on the two calculated values and an assumed degree of crosslinking of the untreated waste rubber material (DCᵤᵣ) of 100%, the degree of crosslinking of the degraded waste rubber material (DC_{dr}) was determined as a relative value in accordance with the equation: DC_{dr} = [DSᵤᵣ / DS_{dr}] × 100%.

Viscosity of the bitumen compositions described herein was determined using a HAAKE RheoStress®6000 plate-plate rheometer (Thermo Scientific) including an UTMC control unit. The samples (width: 25 mm; length: 25 mm; height: 3 mm) were heated using a Peltier temperature module TM-EP-P (Thermo Scientific) and an electrical temperature module TM-EL-H (Thermo Scientific). A thermostat AC200 A28 (Thermo Scientific) was employed as a cooling element. For carrying out the measurement, the "RheoWin Job Manager" software was used. Analysis of the data was carried out using the "RheoWin Data Manager" software.

For determining the viscosity, the measuring geometry of the plate-plate rheometer (lower plate: TMP20; upper plate: P20 CS L) was preheated to a temperature of 170°C for 600 sec. Then, a sample of the composition to be examined was introduced into the measuring geometry of the plate-plate rheometer and heated to 170°C for 600 sec. Thereafter, the temperature of the sample was increased from 170°C to 195°C within 2000 sec using a constant shear speed of 14.1 seconds⁻¹, and the viscosity of the sample at 185°C was calculated from the experimental data thus obtained.

The softening point (Ring and Ball temperature) of the bitumen compositions described herein was determined in accordance with DIN EN 1427.

Needle penetration at 25°C and 50°C of the bitumen compositions described herein was determined in accordance with DIN EN 1426.

The flexibility at low temperature (cold bending temperature) of the bitumen compositions described herein was determined in accordance with DIN EN 1109.

### Example 1: Preparation of degraded waste rubber material

For preparing a degraded waste rubber material having a degree of crosslinking of 0 to 90%, a waste tire rubber material having an average particle size of 0.3 mm (Ecorr RNM45; Spreelast GmbH) was introduced into a counter-rotating twin screw extruder. The counter-rotating twin screw extruder had a length-to-diameter (L/D) ratio of 56, and was equipped with an injection inlet for introducing the waste tire rubber material, a heating system for controlling the temperature of the waste tire rubber material within the extruder, a gas outlet for removing gaseous by-products from the extruder, and an extrusion outlet for removing the degraded waste rubber material from the extruder. The screws of the counter-rotating twin screw extruder were configured for high shear.

In the absence of bitumen and a chemical agent capable of promoting devulcanization or/and depolymerisation of the waste tire rubber material, the waste tire rubber material was subsequently heated to a temperature of 228°C using the extruder's heating system, and was passed through the counter-rotating twin screw extruder at a screw speed of 107 rpm and a throughput of 40 kg/h. By using a combination of increased temperature and high shear, thermomechanical devulcanization or/and depolymerisation of the waste tire rubber material was achieved. The product obtained from the counter-rotating twin screw extruder was a degraded waste tire rubber material having a degree of crosslinking of 34%, as determined by the method described hereinbefore.

### Example 2: Preparation of bitumen composition suitable for use as cold self-adhesive

For preparing bitumen compositions suitable for use as a cold self-adhesive, bitumen (ALTEK® 160/220 R; Total Deutschland GmbH), two types of radial SBS block copolymers (KRATON® D1184 AT and KRATON® D1118 ET; Kraton Polymers Inc.), waste tire rubber powder (Ecorr RNM45; Spreelast GmbH) or the degraded waste rubber material obtained in Example 1, and oil (Fluxöl; Avista Oil AG) were blended in the amounts [% by weight] specified in Table 1, to give bitumen compositions 1 and 2.

**Table 1**

| | Bitumen composition 1* | Bitumen composition 2 |
|---|---|---|
| Bitumen | 73.5 | 69 |
| Radial SBS block copolymer (KRATON® D1184 AT) | 5.5 | 5 |
| Radial SBS block copolymer (KRATON® 1118 ET) | 10 | 9 |
| Waste rubber | 4 | --- |
| Degraded waste rubber material | --- | 8 |
| Oil | 7 | 9 |

| | | |
|---|---|---|
| * Comparative example | | |

Following production, bitumen compositions 1 and 2 were evaluated for their viscosity, Ring and Ball temperature, needle penentration at 25°C, and cold bending temperature, using the methods described hereinbefore. The results are shown in Table 2.

**Table 2**

| | Bitumen composition 1* | Bitumen composition 2 |
|---|---|---|
| Viscosity at 185°C [Pa s] | 5.2 | 5.8 |
| Ring and Ball temperature [°C] | 123 | 116 |
| Needle penetration at 25°C [1/10 mm] | 96 | 105 |
| Cold bending temperature [°C] | -38 | -40 |

| | | |
|---|---|---|
| * Comparative example | | |

### Example 3: Preparation of filler-modified bitumen composition for use at temperatures ≤ -25°C

For preparing filler-modified bitumen compositions suitable for use at temperatures of ≤ -25°C, bitumen (ALTER® 160/220 R; Total Deutschland GmbH), radial SBS block copolymer (KRATON® D1184 AT; Kraton Polymers Inc.), linear SBS block copolymer (KRATON® D1101 AT; Kraton Polymers Inc.), waste tire rubber powder (Ecorr RNM45; Spreelast GmbH) or the degraded waste rubber material obtained in Example 1, and oil (Fluxöl; Avista Oil AG) were blended in the amounts [% by weight] specified in Table 3, to give bitumen compositions 3 to 5.

**Table 3**

| | Bitumen composition 3* | Bitumen composition 4 | Bitumen composition 5 |
|---|---|---|---|
| Bitumen | 73 | 73 | 65 |
| Radial SBS block copolymer | 2.1 | 2.1 | --- |
| Linear SBS block copolymer | 8.4 | 8.4 | 5.5 |
| Waste rubber material | 9.2 | | --- |
| Degraded waste rubber material | --- | 9.2 | 20.5 |
| Oil | 7.3 | 7.3 | 9 |

| | | | |
|---|---|---|---|
| * Comparative example | | | |

Following production, bitumen compositions 3 to 5 were mixed with limestone powder having a particle size of 1 to 90 µm (K 87; Steinwerke Kaider Neupert-Kalk KG) at a weight ratio of 45:55, to give filler-modified (FM) bitumen compositions 1 to 3. Then, filler-modified bitumen compositions 1 to 3 were evaluated for their viscosity, Ring and Ball temperature, needle penentration at 25°C, needle penetration at 50°C, and cold bending temperature, using the methods described hereinbefore. The results are shown in Table 4.

**Table 4**

| | FM bitumen composition 1* | FM bitumen composition 2 | FM Bitumen composition 3 |
|---|---|---|---|
| Viscosity at 185°C [Pa s] | 16.3 | 12.2 | 12.3 |
| Ring and Ball temperature [°C] | 116 | 118 | 109 |
| Needle penetration at 25°C [1/10 mm] | 55 | 47 | 66 |
| Needle penetration at 50°C [1/10 mm] | 119 | 101 | 154 |
| Cold bending temperature [°C] | -32 | -30 | -26 |

| | | | |
|---|---|---|---|
| * Comparative example | | | |

### Example 4: Preparation of filler-modified bitumen composition for use at temperatures ≤ -30°C

For preparing filler-modified bitumen compositions suitable for use at temperatures of ≤ -30°C, bitumen (ALTER® 160/220 R; Total Deutschland GmbH), radial SBS block copolymer (KRATON® D1184 AT; Kraton Polymers Inc.), linear SBS block copolymer (KRATON® D1101 AT; Kraton Polymers Inc.), waste tire rubber powder (Ecorr RNM45; Spreelast GmbH) or the degraded waste rubber material obtained in Example 1, and oil (Fluxöl; Avista Oil AG) were blended in the amounts [% by weight] specified in Table 5, to give bitumen compositions 6 to 8.

**Table 5**

| | Bitumen composition 6* | Bitumen composition 7 | Bitumen composition 8 |
|---|---|---|---|
| Bitumen | 80.25 | 80.25 | 68 |
| Radial SBS block copolymer | 8.94 | 8.94 | 4.5 |
| Linear SBS block copolymer | 3.75 | 3.75 | 4.5 |
| Waste rubber | 3.08 | --- | --- |
| Degraded waste rubber material | --- | 3.08 | 15 |
| Oil | 3.98 | 3.98 | 8 |

| | | | |
|---|---|---|---|
| * Comparative example | | | |

Following production, bitumen compositions 6 and 7 were mixed with limestone powder having a particle size of 1 to 90 µm (K 87; Steinwerke Kaider Neupert-Kalk KG) at a weight ratio of 65:35, to give filler-modified (FM) bitumen compositions 4 and 5. Similarly, bitumen composition 8 was mixed with the filler at a weight ratio of 55:45, to give filler-modified bitumen composition 6. Then, filler-modified bitumen compositions 4 to 6 were evaluated for their viscosity, Ring and Ball temperature, needle penentration at 25°C, needle penetration at 50°C, and cold bending temperature, using the methods described hereinbefore. The results are shown in Table 6.

**Table 6**

| | FM bitumen composition 4* | FM bitumen composition 5 | FM Bitumen composition 6 |
|---|---|---|---|
| Viscosity at 185°C [Pa s] | 11.8 | 10.4 | 14.5 |
| Ring and Ball temperature [°C] | 130 | 127 | 120 |
| Needle penetration at 25°C [1/10 mm] | 53 | 53 | 60 |
| Needle penetration at 50°C [1/10 mm] | 98 | 94 | 124 |
| Cold bending temperature [°C] | -28 | -32 | -32 |

| | | | |
|---|---|---|---|
| * Comparative example | | | |

### Example 5: Preparation of filler-modified bitumen composition for use at temperatures ≤ -35°C

For preparing filler-modified bitumen compositions suitable for use at temperatures of ≤ -35°C, bitumen (ALTEK® 160/220 R; Total Deutschland GmbH), radial SBS block copolymer (KRATON® D1184 AT; Kraton Polymers Inc.), linear SBS block copolymer (KRATON® D1101 AT; Kraton Polymers Inc.), waste tire rubber powder (Ecorr RNM45; Spreelast GmbH) or the degraded waste rubber material obtained in Example 1, and oil (Fluxöl; Avista Oil AG) were blended in the amounts [% by weight] specified in Table 7, to give bitumen compositions 9 to 11.

**Table 7**

| | Bitumen composition 9* | Bitumen composition 10 | Bitumen composition 11 |
|---|---|---|---|
| Bitumen | 69.99 | 69.99 | 68 |
| Radial SBS block copolymer | 4.3 | 4.3 | 5.5 |
| Linear SBS block copolymer | 13.2 | 13.2 | 5.5 |
| Waste rubber | 6 | --- | --- |
| Degraded waste rubber material | --- | 6 | 13 |
| Oil | 6.51 | 6.51 | 8 |

| | | | |
|---|---|---|---|
| * Comparative example | | | |

Following production, bitumen compositions 9 and 10 were mixed with limestone powder having a particle size of 1 to 90 µm (K 87; Steinwerke Kaider Neupert-Kalk KG) at a weight ratio of 65:35, to give filler-modified (FM) bitumen compositions 7 and 8. Similarly, bitumen composition 11 was mixed with the filler at a weight ratio of 60:40, to give filler-modified bitumen composition 9. Then, filler-modified bitumen compositions 7 to 9 were evaluated for their viscosity, Ring and Ball temperature, needle penentration at 25°C, needle penetration at 50°C, and cold bending temperature, using the methods described hereinbefore. The results are shown in Table 8.

**Table 8**

| | FM bitumen composition 7* | FM bitumen composition 8 | FM Bitumen composition 9 |
|---|---|---|---|
| Viscosity at 185°C [Pa s] | 22 | 20.3 | 17.1 |
| Ring and Ball temperature [°C] | 130 | 127 | 123 |
| Needle penetration at 25°C [1/10 mm] | 48 | 45 | 58 |
| Needle penetration at 50°C [1/10 mm] | 96 | 81 | 110 |
| Cold bending temperature [°C] | -40 | -40 | -36 |

| | | | |
|---|---|---|---|
| * Comparative example | | | |

## Claims

1. A bitumen composition, comprising the following components:
(a) 30 to 85% by weight of a bitumen base;
(b) 0.5 to 30% by weight of at least one elastomer or plastomer;
(c) 1 to 40% by weight of a degraded waste rubber material having a degree of crosslinking of 0 to 90%, as determined in accordance with the method disclosed in the description; and
(d) 0 to 30% by weight of at least one oil,
wherein the degraded waste rubber material is obtained by:
(i) providing a waste rubber material; and
(ii) passing the waste rubber material through an extruder under conditions effecting thermomechanical devulcanization or/and depolymerisation of the waste rubber material.

2. The bitumen composition according to claim 1, comprising 1 to 25% by weight of the at least one elastomer or plastomer, or/and comprising 3 to 20% by weight of the at least one oil.

3. The bitumen composition according to claims 1 or 2, wherein the elastomer, if present, is a styrene-butadiene-styrene block copolymer, a styrene-isoprene-styrene block copolymer, a styrene-ethylene/propylene-styrene block copolymer, or a styrene-ethylene/butylene-styrene block copolymer.

4. The bitumen composition according to claim 1 or 2, wherein the plastomer, if present, is an amorphous poly-alpha-olefin, an ethylene-butyl acrylate copolymer, or an ethylene-vinyl acetate copolymer.

5. The bitumen composition according to any one of claims 1 to 4, wherein the degraded waste rubber material has a degree of crosslinking of 15 to 60%.

6. The bitumen composition according to any one of claims 1 to 5, wherein the waste rubber material is passed through the extruder in the absence of non-waste rubber material-derived carbon black, in the essential absence or in the absence of bitumen, and in the essential absence or in the absence of a chemical agent capable of promoting devulcanization or/and depolymerisation of the waste rubber material.

7. The bitumen composition according to any one of claims 1 to 6, wherein the temperature within the extruder is in the range of from 150 to 260°C, and in particular is in the range of from 180 to 240°C.

8. The bitumen composition according to any one of claims 1 to 7, wherein the extruder is a twin screw extruder, and in particular is a counter-rotating twin screw extruder.

9. The bitumen composition according to any one of claims 1 to 8, wherein the waste rubber material is a waste tire rubber material.

10. A filler-modified bitumen composition, comprising the following components:
(a) 25 to <100% by weight of the bitumen composition according to any one of claims 1 to 9; and
(b) >0 to 75% by weight of a filler.

11. The filler-modified bitumen composition according to claim 10, wherein the filler is dolomite or limestone powder.

12. A bituminous sheet, comprising a bitumen composition according to any one of claims 1 to 9, or a filler-modified bitumen composition of claim 10 or 11.

13. Use of the bitumen composition according to any one of claims 1 to 9, or of the filler-modified bitumen composition of claim 10 or 11 as a joint compound or as a hot sealing compound, particularly in roofing applications, basement applications, road construction applications or bridge construction applications.

## Patentansprüche

1. Bitumenzusammensetzung, die folgenden Bestandteile umfassend:
(a) 30 bis 85 Gew.-% einer Bitumenbasis;
(b) 0,5 bis 30 Gew.-% zumindest eines Elastomers oder Plastomers,
(c) 1 bis 40 Gew.-% eines abgebauten Altgummimaterials mit einer gemäß dem in der Beschreibung offenbarten Verfahren ermittelten Vernetzung von 0 bis 90 %; und
(d) 0 bis 30 Gew.-% zumindest eines Öls, wobei das abgebaute Altgummimaterial erhalten wird durch:
(i) Bereitstellen eines Altgummimaterials; und
(ii) Pressen des Altgummimaterials durch einen Extruder unter Bedingungen, die die thermomechanische Entvulkanisierung und/oder Depolymerisation des Altgummimaterials bewirken.

2. Bitumenzusammensetzung nach Anspruch 1, welche 1 bis 25 Gew.-% zumindest eines Elastomers oder Plastomers umfasst und/oder 3 bis 20 Gew.-% zumindest eines Öls umfasst.

3. Bitumenzusammensetzung nach einem der Ansprüche 1 oder 2, wobei das Elastomer, falls vorhanden, ein StyrolButadien-Styrol-Blockcopolymer, ein Styrol-Isopren-Styrol-Blockcopolymer, ein Styrol-Ethylen/Propylen-Styrol-Blockcopolymer oder ein Styrol-Ethylen/Butylen-Styrol-Blockcopolymer ist.

4. Bitumenzusammensetzung nach einem der Ansprüche 1 oder 2, wobei das Plastomer, falls vorhanden, ein amorphes Polyalphaolefin, ein Ethylen-Butylacrylat-Copolymer oder ein Ethylen-Vinylacetat-Copolymer ist.

5. Bitumenzusammensetzung nach einem der Ansprüche 1 bis 4, wobei das abgebaute Altgummimaterial eine Vernetzung von 15 bis 60 % aufweist.

6. Bitumenzusammensetzung nach einem der Ansprüche 1 bis 5, wobei das Altgummimaterial bei Abwesenheit von nicht aus Altgummimaterial erhaltenem Ruß, bei im Wesentlichen Abwesenheit oder Abwesenheit von Bitumen und bei im Wesentlichen Abwesenheit oder Abwesenheit eines chemischen Agens, das zur Förderung der Entvulkanisierung und/oder Depolymerisation des Altgummimaterial fähig ist, durch den Extruder gepresst wird.

7. Bitumenzusammensetzung nach einem der Ansprüche 1 bis 6, wobei die Temperatur in dem Extruder in dem Bereich von 150 bis 260 °C und insbesondere in dem Bereich von 180 bis 240 °C liegt.

8. Bitumenzusammensetzung nach einem der Ansprüche 1 bis 7, wobei es sich bei dem Extruder um einen Doppelschneckenextruder und insbesondere einen gegenläufigen Doppelschneckenextruder handelt.

9. Bitumenzusammensetzung nach einem der Ansprüche 1 bis 8, wobei es sich bei dem Altgummimaterial um ein Altreifengummimaterial handelt.

10. Durch Füllstoff modifizierte Bitumenzusammensetzung, die folgenden Bestandteile umfassend:
(a) 25 bis <100 Gew.-% der Bitumenzusammensetzung nach einem der Ansprüche 1 bis 9; und
(b) >0 bis 75 Gew.-% eines Füllstoffs.

11. Durch Füllstoff modifizierte Bitumenzusammensetzung nach Anspruch 10, wobei es sich bei dem Füllstoff um Dolomit- oder Kalksteinpulver handelt.

12. Bitumenbahn, eine Bitumenzusammensetzung nach einem der Ansprüche 1 bis 9, oder eine durch Füllstoff modifizierte Bitumenzusammensetzung nach Anspruch 10 oder 11 umfassend.

13. Verwendung der Bitumenzusammensetzung nach einem der Ansprüche 1 bis 9 oder der durch Füllstoff modifizierten Bitumenzusammensetzung nach Anspruch 10 oder 11 als Fugenmasse oder Heißvergussmasse, insbesondere bei Dachdeckanwendungen, Anwendungen im Kellerbau, Straßenbau oder Brückenbau.

## Revendications

1. Composition de bitume, comprenant les composants suivants :
(a) de 30 à 85 % en poids d'une base de bitume ;
(b) de 0,5 à 30 % en poids d'au moins un élastomère ou un plastomère ;
(c) de 1 à 40 % en poids d'un matériau de déchets de caoutchouc dégradés ayant un degré de réticulation de 0 à 90 %, tel que déterminé conformément au procédé exposé dans la description ; et
(d) de 0 à 30 % en poids d'au moins une huile,
dans laquelle le matériau de déchets de caoutchouc dégradés est obtenu en :
(i) fournissant un matériau de déchets de caoutchouc ; et en
(ii) faisant passer le matériau de déchets de caoutchouc à travers une extrudeuse dans des conditions produisant une dévulcanisation et/ou une dépolymérisation thermomécanique du matériau de déchets de caoutchouc.

2. Composition de bitume selon la revendication 1, comprenant de 1 à 25 % en poids de l'au moins un élastomère ou un plastomère, ou/et comprenant de 3 à 20 % en poids de l'au moins une huile.

3. Composition de bitume selon la revendication 1 ou 2, dans laquelle l'élastomère, s'il est présent, est un copolymère séquencé de styrène-butadiène-styrène, un copolymère séquencé de styrène-isoprène-styrène, un copolymère séquencé de styrène-éthylène/propylène-styrène, ou un copolymère séquencé de styrène éthylène/butylène-styrène.

4. Composition de bitume selon la revendication 1 ou 2, dans laquelle le plastomère, s'il est présent, est une polyalphaoléfine amorphe, un copolymère d'éthylène-acrylate de butyle, ou un copolymère d'éthylène-acétate de vinyle.

5. Composition de bitume selon l'une quelconque des revendications 1 à 4, dans laquelle le matériau de déchets de caoutchouc dégradé a un degré de réticulation de 15 à 60 %.

6. Composition de bitume selon l'une quelconque des revendications 1 à 5, dans laquelle le matériau de déchets de caoutchouc est passé à travers l'extrudeuse en l'absence de noir de carbone non dérivé du matériau de déchets de caoutchouc, en l'absence essentielle ou en l'absence de bitume, et en l'absence essentielle ou en l'absence d'un agent chimique capable de favoriser la dévulcanisation ou/et la dépolymérisation du matériau de déchets de caoutchouc.

7. Composition de bitume selon l'une quelconque des revendications 1 à 6, dans laquelle la température à l'intérieur de l'extrudeuse se situe dans la plage de 150 à 260 °C, et en particulier dans la plage de 180 à 240 °C.

8. Composition de bitume selon l'une quelconque des revendications 1 à 7, dans laquelle l'extrudeuse est une extrudeuse à double vis, et en particulier une extrudeuse à double vis contrarotatives.

9. Composition de bitume selon l'une quelconque des revendications 1 à 8, dans laquelle le matériau de déchets de caoutchouc est un matériau en caoutchouc de pneumatiques usés.

10. Composition de bitume modifiée par un matériau de remplissage, comprenant les composants suivants :
(a) de 25 à <100 % en poids de la composition de bitume selon l'une quelconque des revendications 1 à 9 ; et
(b) de >0 à 75 % en poids d'un matériau de remplissage.

11. Composition de bitume modifiée par un matériau de remplissage selon la revendication 10, dans laquelle ledit matériau de remplissage est une poudre de dolomite ou de calcaire.

12. Feuille bitumineuse, comprenant une composition de bitume selon l'une quelconque des revendications 1 à 9 ou une composition de bitume modifiée par un matériau de remplissage selon la revendication 10 ou 11.

13. Utilisation de la composition de bitume selon l'une quelconque des revendications 1 à 9 ou de la composition de bitume modifiée par un matériau de remplissage selon la revendication 10 ou 11 comme pâte à joints ou comme pâte de thermoscellage, en particulier dans des applications de construction de toitures, de construction de sous-sols, de construction de routes ou de construction de ponts.
